# EUROPEAN PATENT APPLICATION

(11) **EP 4 822 835 A1**
(43) Date of publication of application: **14.10.2026**
(21) Application number: 24900029.0
(22) Date of filing: 09.12.2024
(51) Int. Cl.: H01M 50/103, H01M 50/131, H01M 50/133, H01M 50/209

(54) **BATTERY CELL CASING, BATTERY CELL, AND BATTERY PACK**

(30) Priority: 07.12.2023 CN 202311670349
(71) Applicant: SVOLT Energy Technology Co., Ltd., Changzhou, Jiangsu 213200 (CN)
(72) Inventor: SHEN, Liangjun, hangzhou, Jiangsu 213200 (CN); GONG, Weihong, hangzhou, Jiangsu 213200 (CN)
(74) Representative: Michalski Hüttermann & Partner mbB
(86) International application number: PCT/CN2024/137869
(87) International publication number: WO 2025/119396

(57) **Abstract**

A battery cell casing, a battery cell, and a battery pack. The battery cell casing comprises a casing body, and the casing body comprises a first connecting edge and a second connecting edge, wherein the first connecting edge and the second connecting edge are joined, and an accommodating cavity is formed inside; and joining portions of the first connecting edge and the second connecting edge are welded to form a weld seam, the weld seam comprises a first boss that protrudes from an inner wall of the casing body, the height of the first boss that protrudes from the casing body towards the accommodating cavity is t₁, the thickness of the casing body is t, and the height and the thickness satisfy ((t₁ + t)/t) ≥ 1.08. In the battery cell casing, the strength of the weld seam is greater than the strength of the casing body, such that the pressure-bearing capability of the battery cell casing can be improved, thereby ensuring that the casing does not crack at the weld seam under the action of internal pressure. By means of increasing the requirements for the weld seam in the battery cell casing, the pressure resistance of the casing is improved, and the safety performance of the battery cell is improved, thereby reducing the risk of vehicle accidents caused by insufficient pressure resistance of the casing due to welding of the casing.

## Description

### CROSS-REFERENCE TO THE RELATED APPLICATIONS

The present application claims priority to Chinese Patent Application No. 202311670349.1, filed with the China National Intellectual Property Administration on December 7, 2023, and entitled "Battery Cell Casing, Battery Cell, and Battery Pack", the contents of which are incorporated herein by reference in entirety.

### TECHNICAL FIELD

The present application relates to the technical field of batteries, and specifically to a battery cell casing, a battery cell, and a battery pack.

### BACKGROUND

A battery cell casing is a carrier for a battery cell. The battery cell casing and a cover plate together form a sealed cavity that packages an electrode assembly inside.

Currently, battery cell casings are mainly formed by bending or rolling, followed by butt welding at side edges. Taking a blade battery cell as an example, the battery cell casing is in the shape of rectangular parallelepiped as a whole and is butt-welded at one side surface so that the battery cell casing has a receiving cavity.

In existing welded structures, a weld seam portion is formed by fusion bonding of a base material, and has lower strength than a plate material itself. In cases where a high-pressure gas is present inside the battery cell, the casing tends to burst at the welded location, failing to meet the requirement that the battery cell can withstand a certain pressure value, resulting in poor safety.

### SUMMARY

In view of this, the present application provides a battery cell casing, a battery cell, and a battery pack to solve the problems of low weld seam strength and poor battery safety in existing welded structures.

In a first aspect, the present application provides a battery cell casing, including a casing body. The casing body includes a first connecting edge and a second connecting edge. The first connecting edge and the second connecting edge are joined together, such that an accommodating cavity is formed inside. Joined portions of the first connecting edge and the second connecting edge are welded to form a weld seam. The weld seam includes a first boss protruding from an inner wall of the casing body. A height by which the first boss protrudes from the casing body toward the accommodating cavity is t₁. A thickness of the casing body is t. The height by which the first boss protrudes from the casing body toward the accommodating cavity satisfies: ((t₁ + t)/t) ≥ 1.08.

Beneficial effects are as follows: By joining the first connecting edge and the second connecting edge together, the casing body has the accommodating cavity formed therein, for receiving an electrode assembly of a battery cell. The first connecting edge and the second connecting edge are butt-welded, and the weld seam has the first boss. The weld seam protrudes from the inner wall of the casing body, and the height t₁ by which the first boss protrudes from the casing body toward the accommodating cavity is greater than or equal to 0.08t. In this way, the strength of the weld seam is greater than the strength of the casing body, such that the pressure-bearing capability of the battery cell casing can be increased, ensuring that the casing does not crack at the weld seam under the action of internal pressure.

In an optional embodiment, the height by which the first boss protrudes from the casing body toward the accommodating cavity further satisfies: t₁ ≤ 0.8t.

Beneficial effects are as follows: By controlling the height by which the first boss of the weld seam protrudes from the casing body toward the accommodating cavity within the range of 0.08t to 0.8t, the strength of the weld seam can be improved, satisfying the requirement that the casing burst pressure of a battery cell is not lower than 1.2 Mpa.

In an optional embodiment, the weld seam further includes a second boss protruding from an outer wall of the casing body.

Beneficial effects are as follows: By providing the second boss and allowing the second boss to protrude from the outer wall of the casing body, two surfaces of the weld seam are higher than the inner wall and the outer wall of the casing body, respectively, further improving the strength of the weld seam and improving the pressure resistance capability of the battery cell casing.

In an optional embodiment, a height by which the second boss protrudes from the casing body in a direction away from the accommodating cavity is t₂, where 0 mm ≤ t₂ ≤ 0.08 mm.

Beneficial effects are as follows: By controlling the height by which the second boss protrudes from the casing body toward the accommodating cavity within the range of 0 to 0.08 mm, the strength of the weld seam is improved, without affecting the wrapping of the battery cell casing with an insulating film.

In an optional embodiment, a width of the weld seam is L, where 0.5 mm ≤ L ≤ 3 mm.

Beneficial effects are as follows: The usage requirements of the battery cell can be met by controlling the width of the weld seam within the range of 0.5 mm to 3 mm.

In an optional embodiment, a cross-section of the first boss and/or the second boss includes an approximately trapezoidal, triangular, or arcuate shape, and/or a width of the first boss and/or the second boss gradually decreases along a direction away from the casing body.

Beneficial effects are as follows: Such configuration allows a smooth transition between the weld seam and the casing body, avoiding the occurrence of an obvious step between the weld seam and the casing body, and preventing damage to the battery cell when the electrode assembly of the battery cell is packed into the battery cell casing.

In an optional embodiment, a burst pressure of the battery cell casing is P, where P ≥ 1.2 Mpa, and the thickness t of the casing body satisfies: 0.2 mm ≤ t ≤ 3 mm.

Beneficial effects are as follows: By controlling the thickness of the casing body within the range of 0.3 mm to 1.5 mm, the design requirement can be met that the burst pressure of the battery cell casing is greater than or equal to 1.2 Mpa.

In an optional embodiment, the battery cell casing includes two oppositely disposed major faces and two oppositely disposed side faces, and the weld seam is located on either of the side faces of the battery cell casing.

Beneficial effects are as follows: Such configuration ensures that when the battery cells are assembled into a battery module, the weld seam does not occupy the assembly space for the major faces of the battery cells.

In an optional embodiment, the thickness t of the casing body satisfies: 0.35 mm ≤ t ≤ 3 mm.

In a second aspect, the present application further provides a battery cell, including an electrode assembly and the battery cell casing according to any one of the above technical solutions, where the electrode assembly is disposed in the accommodating cavity of the battery cell casing.

Beneficial effects are as follows: Since the battery pack includes the battery cell, it has the same effects as those of the battery cell, which will not be described in detail herein.

In a third aspect, the present application further provides a battery pack, including at least two battery cells in the above technical solution.

Beneficial effects are as follows: Since the battery pack includes the battery cell, it has the same effects as those of the battery cell, which will not be described in detail herein.

### BRIEF DESCRIPTION OF THE DRAWINGS

In order to more clearly illustrate the technical solutions of specific embodiments of the present application or of the prior art, drawings required to be used in the description of the specific embodiments or the prior art will be described briefly below. It is obvious that the drawings described below are merely illustrative of some embodiments of the present application. Those ordinarily skilled in the art could obtain other drawings according to these drawings without making inventive efforts.
FIG. 1 is a schematic structural view of a battery cell casing according to an embodiment of the present application;
FIG. 2 is a top view of the battery cell casing shown in FIG. 1;
FIG. 3 is a sectional view taken along A-A in FIG. 2;
FIG. 4 is a partially enlarged schematic structural view of portion B in FIG. 3;
FIG. 5 is a schematic structural view of the battery cell casing bursting at a weld seam;
FIG. 6 is a schematic structural view of the battery cell casing bursting at a major face;
FIG. 7 is a schematic structural view of a battery cell according to an embodiment of the present application; and
FIG. 8 is a metallographic image at a weld seam according to an embodiment of the present application.

### Description of Reference Numerals:

10: battery cell casing; 1: casing body; 101: first connecting edge; 102: second connecting edge; 103: major face; 104: side face; 2: weld seam; 201: first boss; 202: second boss; 3: accommodating cavity; 100: battery cell; C: burst location.

### DETAILED DESCRIPTION OF THE EMBODIMENTS

In order to make the objectives, technical solutions, and advantages of the embodiments of the present application more clear, the technical solutions in the embodiments of the present application will be described below clearly and completely with reference to the drawings in the embodiments of the present application. It is apparent that the embodiments to be described are some, but not all of the embodiments of the present application. All the other embodiments obtained by those skilled in the art in light of the embodiments of the present application without making inventive efforts will fall within the scope of the present application as claimed.

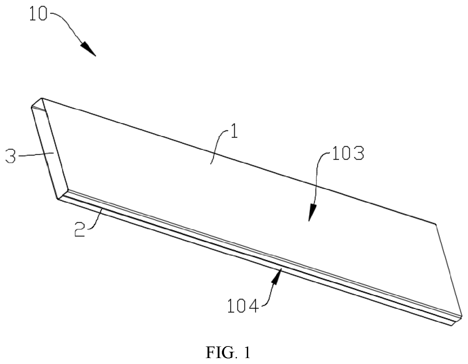

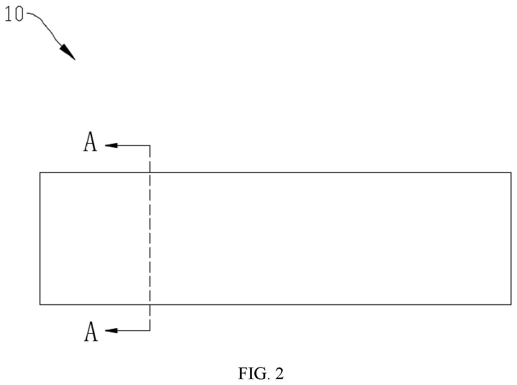

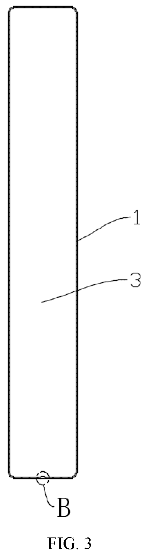

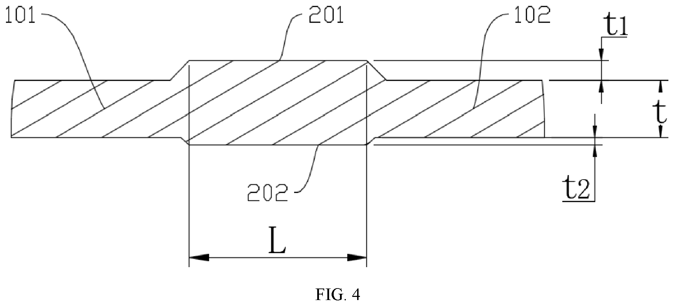

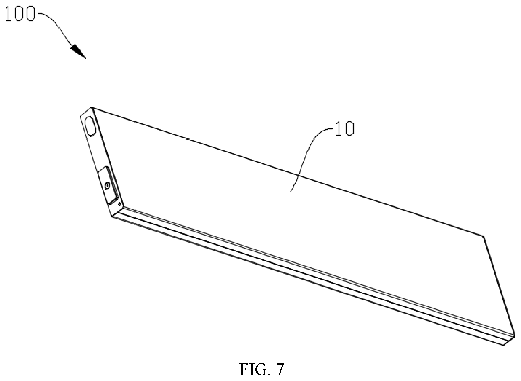

Embodiments of the present application are described below with reference to FIGS. 1 to 8.

According to embodiments of the present application, in one aspect, a battery cell casing 10 is provided, including a casing body 1. The casing body 1 includes a first connecting edge 101 and a second connecting edge 102. The first connecting edge 101 and the second connecting edge 102 are joined together, such that an accommodating cavity 3 is formed inside. The joined portions of the first connecting edge 101 and the second connecting edge 102 are welded to form a weld seam 2. The weld seam 2 includes a first boss 201 protruding from an inner wall of the casing body 1. A height by which the first boss 201 protrudes from the casing body 1 toward the accommodating cavity 3 is t₁. A thickness of the casing body 1 is t. The height by which the first boss 201 protrudes from the casing body 1 toward the accommodating cavity 3 satisfies: ((t₁ + t)/t) ≥ 1.08.

By joining the first connecting edge 101 and the second connecting edge 102 together, the casing body 1 has the accommodating cavity 3 formed therein, for receiving an electrode assembly of a battery cell 100. The first connecting edge 101 and the second connecting edge 102 are butt-welded. The weld seam 2 has the first boss 201. The weld seam 2 protrudes from the inner wall of the casing body 1, and the height t₁ by which the first boss 201 protrudes from the casing body 1 toward the accommodating cavity 3 is greater than or equal to 0.08t. In this way, the strength of the weld seam 2 is greater than that of the casing body 1, which can increase the pressure-bearing capability of the battery cell casing 10, ensuring that the casing does not crack at the weld seam 2 under the action of internal pressure. By increasing the requirements for the weld seam 2 in the battery cell casing 10, the pressure resistance performance of the casing is enhanced, and the safety performance of the battery cell 100 is improved, reducing the risk of vehicle accidents caused by insufficient pressure resistance of the casing due to welding of the casing.

In an embodiment, the height by which the first boss 201 protrudes from the casing body 1 toward the accommodating cavity 3 further satisfies: t₁ ≤ 0.8t.

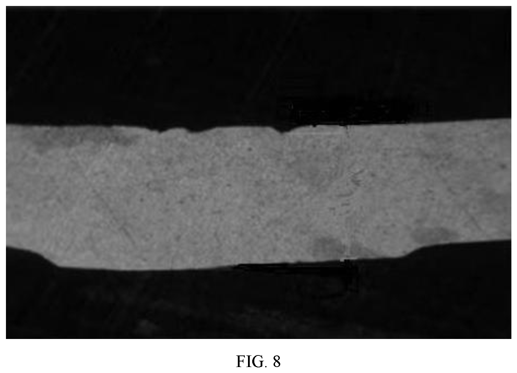

Controlling the height by which the first boss 201 of the weld seam 2 protrudes from the casing body 1 toward the accommodating cavity 3 within the range of 0.08t to 0.8t can improve the strength of the weld seam 2, satisfying the requirement that the casing burst pressure of the battery cell 100 is not lower than 1.2 Mpa. The actual welding effect is shown in the metallographic image at the weld seam in FIG. 8. From the perspective shown in FIG. 8, the downwardly protruding boss is the first boss 201.

In an embodiment, the weld seam 2 further includes a second boss 202 protruding from an outer wall of the casing body 1.

By providing the second boss 202 and allowing the second boss 202 to protrude from the outer wall of the casing body 1, two surfaces of the weld seam 2 are higher than the inner wall and the outer wall of the casing body 1, respectively, further improving the strength of the weld seam 2 and enhancing the pressure resistance capability of the battery cell casing 10.

In an embodiment, a height by which the second boss 202 protrudes from the casing body 1 in a direction away from the accommodating cavity 3 is t₂, where 0 mm ≤ t₂ ≤ 0.08 mm.

Controlling the height by which the second boss 202 protrudes from the casing body 1 in the direction away from the accommodating cavity 3 within the range of 0 to 0.08 mm ensures that the strength of the weld seam 2 is improved, without affecting the wrapping of the battery cell casing 10 with an insulating film.

In an embodiment, a width of the weld seam 2 is L, where 0.5 mm ≤ L ≤ 3 mm.

When the width of the weld seam 2 is relatively small, for example, when the width of the weld seam 2 is less than 0.5 mm, the following disadvantages may occur: 1) The weld seam 2 is relatively sharp, and easily scratches an insulating sheet of the bare battery cell 100 that encloses the electrode assembly when the electrode assembly of the battery cell 100 is packed into the accommodating cavity 3 of the battery cell casing 10, causing the risk of short circuit due to contact between the electrode assembly of the battery cell 100 and the battery cell casing 10; 2) the sealing area of the battery cell casing 10 is relatively narrow, resulting in poor sealing and the risk of electrolyte leakage.

When the width of the weld seam 2 is too large, for example, when the width of the weld seam 2 is greater than 3 mm, the weight of the battery cell casing 10 increases significantly, and the space of the accommodating cavity 3 inside the battery cell casing 10 is reduced, resulting in a decrease in energy density of the battery cell 100 and an increase in cost.

Therefore, the usage requirements of the battery cell 100 can be met by controlling the width of the weld seam 2 within the range of 0.5 mm to 3 mm.

In an embodiment, a cross-section of the first boss 201 and/or the second boss 202 includes an approximately trapezoidal, triangular, or arcuate shape, and/or a width of the first boss 201 and/or the second boss 202 gradually decreases in a direction away from the casing body 1.

In an embodiment, the cross-section of the first boss 201 is trapezoidal or triangular.

In an embodiment, the cross-section of the second boss 202 is trapezoidal or triangular.

Herein, the cross-section of the first boss 201 is set as a trapezoidal shape, and/or the cross-section of the second boss 202 is set as a trapezoidal shape, such that a smooth transition is achieved between the weld seam 2 and the casing body 1, avoiding the occurrence of an obvious step between the weld seam 2 and the casing, and preventing damage to the battery cell 100 when the electrode assembly of the battery cell 100 is packed into the battery cell casing 10.

In an embodiment, a burst pressure of the battery cell casing is P, where P ≥ 1.2 Mpa, and the thickness t of the casing body 1 satisfies: 0.2 mm ≤ t ≤ 3 mm.

The thickness of the casing body 1 is controlled within the range of 0.3 mm to 1.5 mm, which can ensure that the casing body 1 meets the design requirement that the burst pressure of the battery cell casing is greater than or equal to 1.2 Mpa.

In an embodiment, the battery cell casing 10 has a rectangular parallelepiped structure, and the battery cell casing 10 is configured to be connected and closed by a single weld seam 2.

The battery cell casing 10 having a rectangular parallelepiped structure is suitable for a blade battery. After the casing body 1 of the battery cell casing 10 is bent, two edges are the first connecting edge 101 and the second connecting edge 102, respectively. The first connecting edge 101 and the second connecting edge 102 are butted and welded to form the single weld seam 2. The battery cell casing 10 is connected and closed by the single weld seam 2, forming the accommodating cavity, where not only the usage requirements of the battery cell 100 can be met, but also the weight of the battery cell casing 10 is controlled within a reasonable range.

In an embodiment, the battery cell casing 10 includes two oppositely disposed major faces 103 and two oppositely disposed side faces 104, and the weld seam 2 is located on either side face 104 of the battery cell casing 10.

When battery cells 100 are to be assembled into a battery module, the battery cells 100 are typically joined adjacent to each other by their major faces 103. By configuring the weld seam 2 of the battery cell casing 10 on the side face 104, when the battery cells 100 are assembled into the battery module, the weld seam 2 does not occupy the assembly space for the major faces 103 of the battery cells 100.

A comparison table of experiments for burst pressure of casings using the weld seams 2 of different dimensions is provided below.

The strength of the battery cell casings should be designed to satisfy: the burst pressure P ≥ 1.2 Mpa.

In an embodiment, the thickness t of the casing body 1 satisfies: 0.35 mm ≤ t ≤ 3 mm.

For the following battery cell casings 10, the thickness t of the casing body 1 is 0.35 mm. Seven experimental groups are set, with six battery cell casings 10 in each experimental group, corresponding to the same type of weld seam 2 for connection (the weld seams 2 are identical except that the values of t₁ and t₂ are different). Table 1 shows the actually measured values of the casing burst pressure and the experimental results of tear locations for different heights of the weld seams 2 inside the battery cell casings 10.

**Table 1**

| | | Casing Burst Pressure P (Mpa) | | | | | | Tear Location |
|---|---|---|---|---|---|---|---|---|
| Experimental Group | Values of t₁ and t₂ (mm) | Casing 1 | Casing 2 | Casing 3 | Casing 4 | Casing 5 | Casing 6 | |
| Group 1 | t₁=0.01, t₂=0.03 | 0.96 | 0.94 | 0.95 | 0.95 | 0.96 | 0.98 | At the weld seam of the casing |
| Group 2 | t₁=0.02, t₂=0.03 | 1.08 | 1.11 | 1.09 | 1.07 | 1.08 | 1.07 | At the weld seam of the casing |
| Group 3 | t₁=0.03, t₂=0.03 | 1.22 | 1.23 | 1.21 | 1.23 | 1.24 | 1.23 | At the weld seam of the casing |
| Group 4 | t₁=0.04, t₂=0.03 | 1.28 | 1.29 | 1.27 | 1.28 | 1.29 | 1.28 | At the weld seam of the casing |
| Group 5 | t₁=0.05, t₂=0.03 | 1.38 | 1.37 | 1.36 | 1.38 | 1.38 | 1.39 | At the major face of the casing |
| Group 6 | t₁=0.06, t₂=0.03 | 1.40 | 1.39 | 1.41 | 1.41 | 1.42 | 1.43 | At the major face of the casing |
| Group 7 | t₁=0.12, t₂=0.03 | 1.41 | 1.38 | 1.43 | 1.41 | 1.41 | 1.42 | At the major face of the casing |

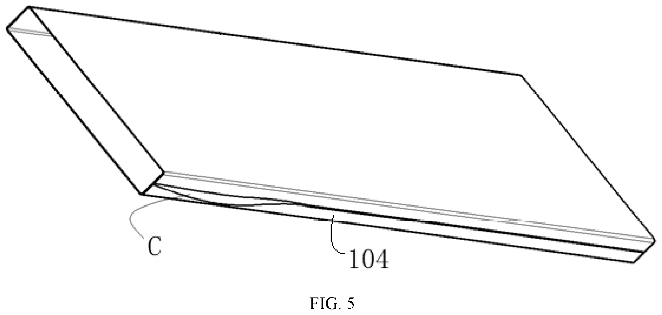

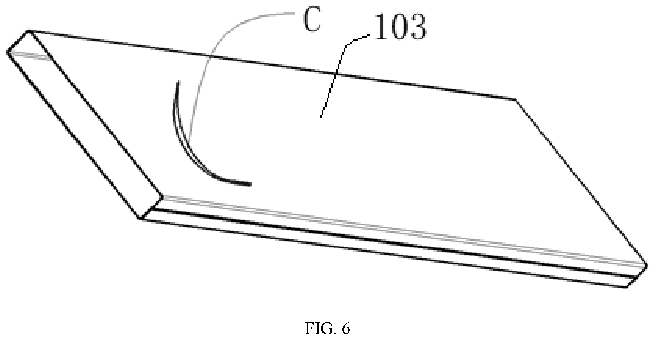

As can be seen from Table 1, it can be seen from the burst experimental data for six casings with different thicknesses of weld seams 2 that: when the protruding height of the first boss 201 of the weld seam 2 satisfies ((t₁ + t)/t) ≥ 1.08, i.e., t₁ ≥ 0.028 mm, the maximum burst pressure of the casing is greater than 1.2 Mpa, meeting the design and usage requirements of the battery cell 100, where the burst location C is at the weld seam, as shown in FIG. 5; when the protruding height of the first boss 201 of the weld seam 2 reaches 0.05 mm, the battery cell casing 10 reaches a maximum burst, and the burst occurs at the major face 103, where the burst location C is at the major face 103 of the casing, as shown in FIG. 6; if the protruding height of the first boss 201 of the weld seam 2 is further increased, the burst still occurs at the major face 103, and then there is no need to further increase the height of the weld seam 2.

For the following battery cell casings 10, the thickness t of the casing body 1 is 0.4 mm. Seven experimental groups are set, with six battery cell casings 10 in each experimental group, corresponding to the same type of weld seam 2 for connection (the weld seams 2 are identical except that the values of t₁ and t₂ are different). Table 2 shows the actually measured values of the casing burst pressure and the experimental results of tear locations for different heights of the weld seams 2 inside the battery cell casings 10.

**Table 2**

| | | Casing Burst Pressure P (Mpa) | | | | | | Tear Location |
|---|---|---|---|---|---|---|---|---|
| Experimental Group | Values of t₁ and t₂ (mm) | Casing 1 | Casing 2 | Casing 3 | Casing 4 | Casing 5 | Casing 6 | |
| Group 1 | t₁=0.009, t₂=0.03 | 0.96 | 0.97 | 0.97 | 0.96 | 0.97 | 0.96 | At the weld seam of the casing |
| Group 2 | t₁=0.021, t₂=0.03 | 1.08 | 1.11 | 1.12 | 1.09 | 1.09 | 1.13 | At the weld seam of the casing |
| Group 3 | t₁=0.032, t₂=0.03 | 1.20 | 1.21 | 1.21 | 1.20 | 1.21 | 1.21 | At the weld seam of the casing |
| Group 4 | t₁=0.04 | 1.28 | 1.29 | 1.27 | 1.27 | 1.28 | 1.29 | At the weld seam of the casing |
| | t₂=0.03 | | | | | | | |
| Group 5 | t₁=0.065, t₂=0.03 | 1.46 | 1.46 | 1.48 | 1.46 | 1.45 | 1.46 | At the major face of the casing |
| Group 6 | t₁=0.08, t₂=0.03 | 1.46 | 1.48 | 1.47 | 1.48 | 1.49 | 1.49 | At the major face of the casing |
| Group 7 | t₁=0.11, t₂=0.03 | 1.48 | 1.47 | 1.48 | 1.49 | 1.48 | 1.51 | At the major face of the casing |

As can be seen from Table 2, it can be seen from the burst experimental data for six casings with different thicknesses of weld seams 2 that: when the protruding height of the first boss 201 of the weld seam 2 satisfies ((t₁ + t)/t) ≥ 1.08, i.e., t₁ ≥ 0.032 mm, the maximum burst pressure of the casing is greater than 1.2 Mpa, meeting the design and usage requirements of the battery cell 100, where the burst location C is at the weld seam, as shown in FIG. 5; when the protruding height of the first boss 201 of the weld seam 2 reaches 0.065 mm, the battery cell casing 10 reaches a maximum burst, and the burst occurs at the major face 103, where the burst location C is at the major face 103 of the casing, as shown in FIG. 6; if the protruding height of the first boss 201 of the weld seam 2 is further increased, the burst still occurs at the major face 103, and then there is no need to further increase the height of the weld seam 2.

For the following battery cell casings 10, the thickness t of the casing body 1 is 0.5 mm. Seven experimental groups are set, with six battery cell casings 10 in each experimental group, corresponding to the same type of weld seam 2 for connection (the weld seams 2 are identical except that the values of t₁ and t₂ are different). Table 3 shows the actually measured values of the casing burst pressure and the experimental results of tear locations for different heights of the weld seams 2 inside the battery cell casings 10.

**Table 3**

| | | Casing Burst Pressure P (Mpa) | | | | | | Tear Location |
|---|---|---|---|---|---|---|---|---|
| Experimental Group | Values of t₁ and t₂ (mm) | Casing 1 | Casing 2 | Casing 3 | Casing 4 | Casing 5 | Casing 6 | |
| Group 1 | t₁=0.01, t₂=0.03 | 0.92 | 0.95 | 0.94 | 0.94 | 0.93 | 0.94 | At the weld seam of the casing |
| Group 2 | t₁=0.02, t₂=0.03 | 1.09 | 1.11 | 1.10 | 1.08 | 1.08 | 1.14 | At the weld seam of the casing |
| Group 3 | t₁=0.03, t₂=0.03 | 1.16 | 1.19 | 1.18 | 1.18 | 1.17 | 1.19 | At the weld seam of the casing |
| Group 4 | t₁=0.04 (((t₁+t)/t)≥ 1.08), t₂=0.03 | 1.27 | 1.26 | 1.28 | 1.27 | 1.28 | 1.27 | At the weld seam of the casing |
| Group 5 | t₁=0.06, t₂=0.03 | 1.44 | 1.43 | 1.44 | 1.43 | 1.41 | 1.44 | At the major face of the casing |
| Group 6 | t₁=0.08, t₂=0.03 | 1.40 | 1.39 | 1.41 | 1.41 | 1.42 | 1.43 | At the major face of the casing |
| Group 7 | t₁=0.12, t₂=0.03 | 1.41 | 1.46 | 1.43 | 1.41 | 1.45 | 1.46 | At the major face of the casing |

As can be seen from Table 3, it can be seen from the burst experimental data for six casings with different thicknesses of weld seams 2 that: when the protruding height of the first boss 201 of the weld seam 2 satisfies ((t₁ + t)/t) ≥ 1.08, i.e., t₁ ≥ 0.04 mm, the maximum burst pressure of the casing is greater than 1.2 Mpa, meeting the design and usage requirements of the battery cell 100, where the burst location C is at the weld seam, as shown in FIG. 5; when the protruding height of the first boss 201 of the weld seam 2 reaches 0.06 mm, the battery cell casing 10 reaches a maximum burst, and the burst occurs at the major face 103, where the burst location C is at the major face 103 of the casing, as shown in FIG. 6; if the protruding height of the first boss 201 of the weld seam 2 is further increased, the burst still occurs at the major face 103, and then there is no need to further increase the height of the weld seam 2.

For the following battery cell casings 10, the thickness t of the casing body 1 is 0.55 mm. Seven experimental groups are set, with six battery cell casings 10 in each experimental group, corresponding to the same type of weld seam 2 for connection (the weld seams 2 are identical except that the values of t₁ and t₂ are different). Table 4 shows the actually measured values of the casing burst pressure and the experimental results of tear locations for different heights of the weld seams 2 inside the battery cell casings 10.

**Table 4**

| | | Casing Burst Pressure P (Mpa) | | | | | | Tear Location |
|---|---|---|---|---|---|---|---|---|
| Experimental Group | Values of t₁ and t₂ (mm) | Casing 1 | Casing 2 | Casing 3 | Casing 4 | Casing 5 | Casing 6 | |
| Group 1 | t₁=0.01, t₂=0.03 | 0.98 | 0.99 | 0.98 | 0.97 | 0.99 | 0.98 | At the weld seam of the casing |
| Group 2 | t₁=0.024, t₂=0.03 | 1.13 | 1.14 | 1.13 | 1.13 | 1.12 | 1.14 | At the weld seam of the casing |
| Group 3 | t₁=0.032, t₂=0.03 | 1.19 | 1.19 | 1.18 | 1.17 | 1.18 | 1.19 | At the weld seam of the casing |
| Group 4 | t₁=0.044 (((t₁+t)/t)≥ 1.08), t₂=0.03 | 1.28 | 1.27 | 1.28 | 1.28 | 1.28 | 1.29 | At the weld seam of the casing |
| Group 5 | t₁=0.055, t₂=0.03 | 1.43 | 1.45 | 1.44 | 1.43 | 1.46 | 1.44 | At the major face of the casing |
| Group 6 | t₁=0.065, t₂=0.03 | 1.47 | 1.48 | 1.48 | 1.48 | 1.47 | 1.47 | At the major face of the casing |
| Group 7 | t₁=0.1, t₂=0.03 | 1.48 | 1.48 | 1.49 | 1.47 | 1.48 | 1.47 | At the major face of the casing |

As can be seen from Table 4, it can be seen from the burst experimental data for six casings with different thicknesses of weld seams 2 that: when the protruding height of the first boss 201 of the weld seam 2 satisfies ((t₁ + t)/t) ≥ 1.08, i.e., t₁ ≥ 0.044 mm, the maximum burst pressure of the casing is greater than 1.2 Mpa, meeting the design and usage requirements of the battery cell 100, where the burst location C is at the weld seam, as shown in FIG. 5; when the protruding height of the first boss 201 of the weld seam 2 reaches 0.055 mm, the battery cell casing 10 reaches a maximum burst, and the burst occurs at the major face 103, where the burst location C is at the major face 103 of the casing, as shown in FIG. 6; if the protruding height of the first boss 201 of the weld seam 2 is further increased, the burst still occurs at the major face 103, and then there is no need to further increase the height of the weld seam 2.

For the battery cell casing 10 provided in the present embodiment which is a long battery cell casing 10 such as a blade battery cell casing 10, since the wall thickness of the casing body 1 is very small, the casing welding introduces an increased risk of cracking. Therefore, the thickness of the weld seam 2 is increased during the welding to reduce the risk posed by the casing welding to the battery cell 100. Meanwhile, considering structural weight and space issues, reasonably increasing the weld strength can optimally improve the strength of the weld seam 2 of the casing. Hence, relevant dimensions such as height and width of the weld seam 2 are designed and specified in the present patent.

According to embodiments of the present application, in the second aspect, a battery cell 100 is further provided, including an electrode assembly and the battery cell casing 10 according to any one of the above technical solutions, where the electrode assembly is disposed in the accommodating cavity 3 of the battery cell casing 10.

Since the battery pack includes the battery cell 100, it has the same effects as those of the battery cell 100, which will not be described in detail herein.

According to embodiments of the present application, in the third aspect, a battery pack is further provided, including at least two battery cells 100 in the above technical solution.

Since the battery pack includes the battery cell 100, it has the same effects as those of the battery cell 100, which will not be described in detail herein.

Although the embodiments of the present application have been described with reference to the drawings, various modifications and variations could be made by those skilled in the art without departing from the spirit and scope of the present application, and such modifications and variations all fall within the scope defined by the appended claims.

## Claims

1. A battery cell casing, **characterized by** comprising a casing body, the casing body comprising a first connecting edge and a second connecting edge, wherein the first connecting edge and the second connecting edge are joined together, and an accommodating cavity is formed inside; joined portions of the first connecting edge and the second connecting edge are welded to form a weld seam, wherein the weld seam comprises a first boss protruding from an inner wall of the casing body, a height by which the first boss protrudes from the casing body toward the accommodating cavity is t₁, a thickness of the casing body is t, and the height by which the first boss protrudes from the casing body toward the accommodating cavity satisfies: ((t₁ + t)/t) ≥ 1.08.

2. The battery cell casing as claimed in claim 1, **characterized in that** the height by which the first boss protrudes from the casing body toward the accommodating cavity further satisfies: t₁ ≤ 0.8t.

3. The battery cell casing as claimed in claim 1 or 2, **characterized in that** the weld seam further comprises a second boss protruding from an outer wall of the casing body.

4. The battery cell casing as claimed in claim 3, **characterized in that** a height by which the second boss protrudes from the casing body in a direction away from the accommodating cavity is t₂, wherein 0 mm ≤ t₂ ≤ 0.08 mm.

5. The battery cell casing as claimed in claim 1 or 2, **characterized in that** a width of the weld seam is L, wherein 0.5 mm ≤ L ≤ 3 mm.

6. The battery cell casing as claimed in claim 3, **characterized in that** a cross-section of the first boss and/or the second boss comprises an approximately trapezoidal, triangular, or arcuate shape, and/or a width of the first boss and/or the second boss gradually decreases in a direction away from the casing body.

7. The battery cell casing as claimed in claim 1 or 2, **characterized in that** a burst pressure of the battery cell casing is P, P ≥ 1.2 Mpa, and the thickness t of the casing body satisfies: 0.2 mm ≤ t ≤ 3 mm.

8. The battery cell casing as claimed in claim 7, **characterized in that** the battery cell casing comprises two oppositely disposed major faces and two oppositely disposed side faces, and the weld seam is located on either of the side faces of the battery cell casing.

9. The battery cell casing as claimed in any one of claims 1 to 8, **characterized in that** the thickness t of the casing body satisfies: 0.35 mm ≤ t ≤ 3 mm.

10. A battery cell, **characterized by** comprising:
the battery cell casing as claimed in any one of claims 1 to 9; and
an electrode assembly, the electrode assembly being disposed in the accommodating cavity of the battery cell casing.

11. A battery pack, **characterized by** comprising at least two battery cells as claimed in claim 10.
